# EUROPEAN PATENT SPECIFICATION

(11) **EP 4 353 062 B1**
(45) Date of publication and mention of the grant of the patent: **10.06.2026**
(21) Application number: 23203650.9
(22) Date of filing: 13.10.2023
(51) Int. Cl.: A01B 79/00, A01D 41/127, A01D 41/14, A01D 45/00, A01D 45/02, A01D 57/01, A01D 57/22, G01B 21/12

(54) **IMPACT SENSING SYSTEMS AND METHODS FOR AN AGRICULTURAL HEADER**
AUFPRALLERFASSUNGSSYSTEME UND VERFAHREN FÜR EINEN LANDWIRTSCHAFTLICHEN ERNTEVORSATZ
SYSTÈMES ET PROCÉDÉS DE DÉTECTION D'IMPACT POUR TÊTE DE COUPE AGRICOLE

(30) Priority: 14.10.2022 US 202263416051 P
(43) Date of publication of application: 17.04.2024
(73) Proprietor: CNH Industrial America LLC, New Holland, PA 17557 (US)
(72) Inventor: JONGMANS, Dre Waltherus Joachim, New Holland, 17557 (US); WALKER, Eric Lee, New Holland, 17557 (US); HUNT, Cory Douglas, New Holland, 17557 (US)
(74) Representative: CNH Industrial IP Department

(56) References cited:
- EP-A1- 3 659 424
- EP-A1- 3 998 585
- US-A1- 2022 000 029
- US-B2- 9 232 693
- US-B2- 9 894 835
- US-B2- 9 903 979

## Description

### BACKGROUND

The present invention generally relates to impact sensing on an agricultural header, and more particularly, to impact sensing systems and methods that detect a location of initial contact between a crop and an agricultural header.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travel through a field. Conveyors (e.g., augers) carry the ears of corn toward processing machinery and/or storage compartments of the harvester, while the stalks are deposited back into the field.

US 9 232 693 B2 discloses, according to its abstract, a system for sensing the diameter of stalks of plants when a stalk of a plant enters an elongate gap in a row harvesting unit. US 9 903 979 B2 discloses, according to its abstract, a method and apparatus for estimating yield by a first method measuring aggregate yield during a measurement yield and a second method based upon sense power characteristics across a harvesting width of a harvesting machine.

### BRIEF DESCRIPTION

In one aspect of the invention, an impact sensor system is provided as set forth in claim 1. The impact sensor system for a header of an agricultural system includes a first sensor vibrationally connected to a deck plate of the header, wherein the first sensor is configured to generate first signals in response to detection of vibrations due to initial contact between a crop and the deck plate of the header. The impact sensor system also includes a second sensor vibrationally connected to the deck plate of the header and positioned forward of the first sensor, wherein the second sensor is configured to generate second signals in response to detection of the vibrations due to the initial contact between the crop and the deck plate of the header. The impact sensor system also includes a controller configured to: receive the first signals and the second signals to determine a location of the initial contact between the crop and the deck plate of the header.

In another aspect of the present invention, a method is provided as set forth in claim 14. The method includes operating a header to harvest crops as the header travels through a field. The method also includes generating, via a first sensor coupled to a first location of a deck plate of the header, first signals indicative of vibrations due to an initial contact between a portion of the crops and the deck plate of the header. The method further includes generating, via a second sensor coupled to a second location of the deck plate of the header that is separated from the first location by a distance along a longitudinal axis, second signals indicative of the vibrations due to the initial contact between the portion of the crops and the deck plate of the header. The method further includes processing, via one or more processors, the first signals and the second signals to determine a contact location of the initial contact between the portion of the crops and the deck plate of the header.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a perspective front view of a portion of the header of FIG. 2, in accordance with an embodiment of the present disclosure;
FIG. 4 is a perspective front view of a portion of the header of FIG. 2, with components removed to show a pair of deck plates and a deck plate linkage assembly of a row unit, in accordance with an embodiment of the present disclosure;
FIG. 5 is a perspective side view of a deck plate that may be utilized in the header of FIG. 2, in accordance with an embodiment of the present disclosure;
FIG. 6 is a schematic diagram of a portion of the header of FIG. 2 with sensors, as well as exemplary graphs of signals generated by the sensors; and
FIG. 7 is a flowchart of a method for determining an impact location on a header, such as the header of FIG. 2, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, each row unit may include deck plates, stalk rollers, and/or other components that operate to separate ears of corn from stalks as the harvester travel through the field. Conveyors (e.g., augers) carry the ears of corn toward processing machinery and/or storage compartments of the harvester, while the stalks are deposited back into the field.

It is presently recognized that it is desirable to determine a location (e.g., an impact location) of initial contact between the ears of corn and the deck plates relative to a longitudinal axis of the header. Generally, for good harvesting performance, the ears of corn should make initial contact with the deck plates toward a forward portion of the deck plates relative to the longitudinal axis of the header (e.g., a forward half; forward of a midpoint of the deck plates along the longitudinal axis). This may enable the stalks to be completely discharged from the header before reaching a rear portion of the deck plates, thereby reducing a likelihood of the stalks being fed into the processing machinery and/or storage compartments of the harvester (and thus, reducing an amount of material other than grain [MOG] among the ears of corn).

Accordingly, present embodiment relate generally to an impact sensor system. The impact sensor system may include one or more sensors (e.g., knock sensors; vibration sensors) positioned on the header, and the one or more sensors are configured to generate signals (e.g., data) indicative of the location of the initial contact between the ears of corn and the deck plates. In some embodiments, the one or more sensors are coupled, directly or indirectly, to the deck plates. For example, the one or more sensors may be coupled directly to protrusions (e.g., extensions) of the deck plates. As another example, the one or more sensors may be coupled indirectly to the deck plates via brackets (e.g., extensions).

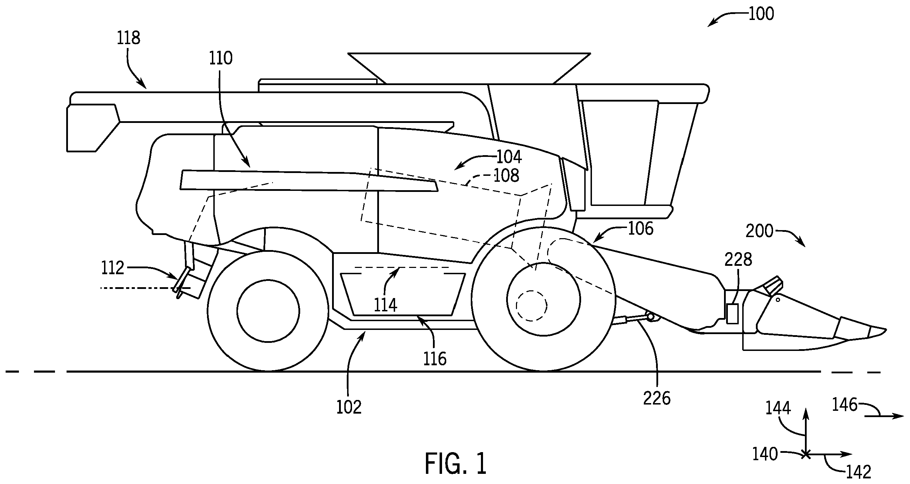

With the foregoing in mind, FIG. 1 is a side view of an embodiment of an agricultural system 100, which may be a harvester. The agricultural system 100 includes a chassis 102 configured to support a header 200 (e.g., a corn header) and an agricultural crop processing system 104. The header 200 is configured to separate a portion of crops (e.g., ears of corn) from stalks and to transport the portion of the crops toward an inlet 106 of the agricultural crop processing system 104 for further processing of the portion of the crops. The header 200 may also chop and/or return other portions of the crops (e.g., material other than grain [MOG], such as stalks) to a field.

The agricultural crop processing system 104 receives the portion of the crops from the header 200 and separates desired crop material from crop residue. For example, the agricultural crop processing system 104 may include a thresher 108 having a cylindrical threshing rotor that transports the portion of the crops in a helical flow path through the agricultural system 100. In addition to transporting the portion of the crops, the thresher 108 may separate the desired crop material (e.g., grain) from the crop residue (e.g., husks), and may enable the desired crop material to flow into a cleaning system 114 (e.g., sieves) located beneath the thresher 108. The cleaning system 114 may remove debris from the desired crop material and transport the desired crop material to a storage tank 116 within the agricultural system 100. When the storage tank 116 is full, a tractor with a trailer may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

In the illustrated embodiment, the agricultural system 100 may include one or more actuators configured to manipulate the spatial orientation and/or position of the header 200 with respect to the chassis 102, and/or the spatial orientation of the header 200 with respect to the crop rows/ground/soil. A header height actuator 226 may drive the header 200 to move along the vertical direction 144 relative to the ground. The header 200 may be attached to the chassis 102 (e.g., via a linkage). The position of the header 200 may be manipulated by the header height actuator 226 to adjust the height of the header 200. The agricultural system 100 may also include a header orientation actuator 228. The header orientation actuator 228 may be configured to rotate the angular orientation of the header 200 (e.g., the entire header 200 or a portion thereof) relative to the ground. The actuators may be manipulated in response to one or more stimuli to adjust the agricultural system 100 to one or more environmental variables (e.g., soil condition, terrain, crop damage). As discussed herein, an impact sensor system may include one or more sensors (e.g., knock sensors; vibration sensors) on the header 200, and the impact sensor system may receive and process signals generated by the one or more sensors to determine a location (e.g., impact location) of initial contact between the crop (e.g., ears of corn) and certain portions (e.g., deck plates) of the header 200 relative to the longitudinal axis 142 of the header 200. In some embodiments, the actuators and/or other components of the header 200 may be manipulated based on the location of the initial contact.

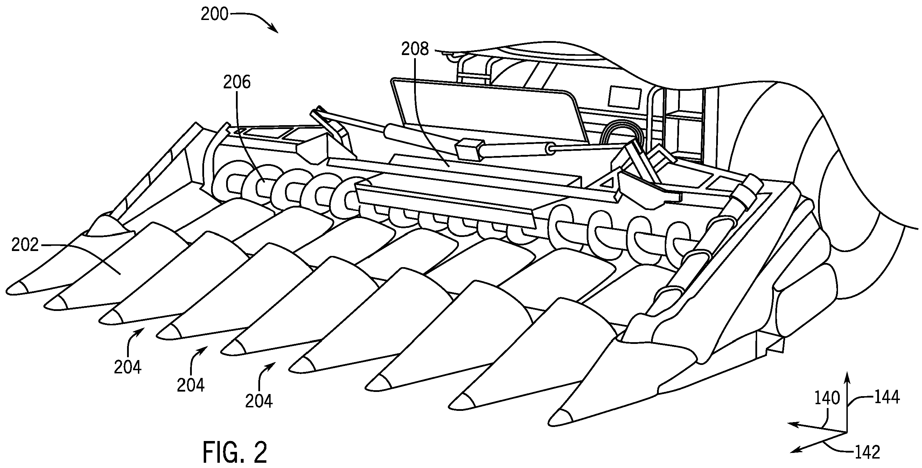

FIG. 2 is a perspective view of an embodiment of the header 200 that may be employed within the agricultural system 100 of FIG. 1. In the illustrated embodiment, the header 200 is a corn header and includes multiple dividers 202 configured to separate rows of a crop (e.g., corn). The dividers 202 may be distributed across a width of the header 200 (e.g., along the lateral axis 140). As the header 200 moves along a path, the dividers 202 may direct the crops from each row to one or more row units 204. The row units 204 are configured to separate a portion of each crop (e.g., ear of corn) from a stalk of each crop, thereby separating the portion of each crop from the stalk and the soil. The portion of the crop may be directed toward one of a pair of conveyors 206 (e.g., augers) configured to convey the portion of the crop laterally inward to a center crop conveyor 208 at a center of the header 200, and the center crop conveyor 208 directs the portion of the crop toward the inlet of the agricultural crop processing system. As illustrated, the conveyors 206 extend along a substantial portion of the width of the header 200 (e.g., along the lateral axis 140). The conveyors 206 may be driven by a drive mechanism (e.g., electric motor, hydraulic motor). The row units 204 may also chop and/or return other portions of the crops (e.g., MOG, such as stalks) to the field.

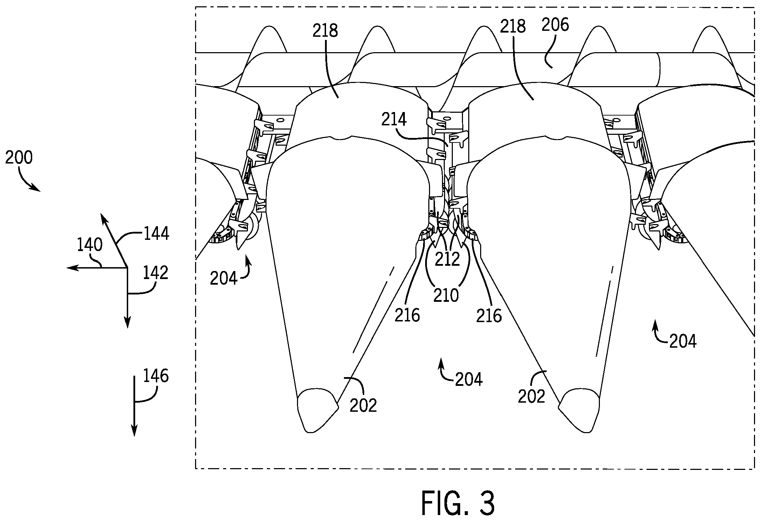

FIG. 3 is a perspective front view of an embodiment of a portion of the header 200. As shown, the portion of the header 200 includes the multiple dividers 202 that direct the crops to one or more row units 204. Each row unit 204 includes various components that operate to separate desired crop material (e.g., the ears of corn) from the stalks, carry the desired crop material toward the conveyors 206, and return the stalks to the field. For example, each row unit 204 may include a pair of stalk rollers 210 that are configured to grip the stalks and rotate in opposite directions to push the stalks toward the field (e.g., vertically downward; below the header 200). Each row unit 204 also includes a pair of deck plates 212 that are positioned over the pair of stalk rollers 210. Each deck plate 212 extends from a first end to a second end along the longitudinal axis 142, and the pair of deck plates 212 are separated from one another along the lateral axis 140 to define a gap 214. Further, each row unit 204 may include a pair of chains 216 (e.g., with lugs) that are configured to drive or push the desired crop material along the pair of deck plates 212 toward the conveyors 206. The pair of deck plates 212 are spaced apart so that the gap 214 is sized to enable the stalks to pass through the gap 214, but to block the desired crop material from falling through the gap 214. Thus, the pair of stalk rollers 210 and the pair of deck plates 212 operate to separate the desired crop material from the stalks (e.g., the pair of stalk rollers 210 direct the stalks toward the field, while the desired crop material is blocked from falling through the gap 214 between the pair of deck plates 212). As discussed in more detail herein, the pair of deck plates 212 are adjustable and may be driven (e.g., via an actuator) toward and away from one another along the lateral axis 140 to change a size of the gap 214 (e.g., a width of the gap 214 along the lateral axis 140). A hood 218 is positioned rearward of each divider 202 and between adjacent row units 204 to cover various components, such as the actuator that drives the pair of deck plates 212, linkages, sensors, and so forth.

As noted herein, for good harvesting performance, the crop (e.g., the desired crop material; the portion of the crop; ears of corn) should make initial contact with the pair of deck plates 212 toward a forward portion of the pair of deck plates 212 relative to the longitudinal axis 142 or the forward direction of travel 146 of the header 200 (e.g., a forward half; forward of a midpoint of the pair of deck plates 212 along the longitudinal axis 142; a target impact region). This may enable the stalks to be completely discharged from the header 200 before reaching a rear portion of the pair of deck plates 212, thereby reducing a likelihood of the stalks being fed into the conveyors 206. Accordingly, an impact sensor system may include one or more sensors (e.g., knock sensors; vibration sensors) on the header 200, and the impact sensor system may receive and process signals generated by the one or more sensors to determine the location of the initial contact between the crop and the pair of deck plates 212 (e.g., along a length of the pair of deck plates 212; between the first end and the second end of the pair of deck plates 212).

Further, the impact sensor system may include a controller (e.g., electronic controller) that receives and processes the signals, determines the location of the initial contact, and then generates an appropriate output. In some embodiments, the appropriate output may include a visual alarm (e.g., presented via a display screen in a cab of the agricultural system; text message with an explanation and/or a recommended adjustment to the header 200) and/or an audible alarm (e.g., presented via a speaker in the cab of the agricultural system). In some embodiments, the appropriate output may include control signals, such as control signals to the actuators to adjust the position and/or the spatial orientation of the header 200 and/or a rotation rate of the pair of stalk rollers 210. For example, in response to the location of the initial contact being rearward of the target impact region of the pair of deck plates (e.g., for some percentage of the crops over some period of time, such as more than 10, 20, 30, 40, or 50 percent over 10, 20, or 30 seconds), the controller may instruct output of the visual alarm and/or the audible alarm, raise the header 200 relative to the chassis of the agricultural system and the ground, and/or reduce an angle between the header and the ground (e.g., rotate the header relative to the chassis of the agricultural system to lift a front end of the header relative to a rear end of the header). In some embodiments, the controller may provide the control signals to manipulate the actuators based on the location of the initial contact, but also accounting for other operational features (e.g., detected loose or flying kernels, detected stalks at the rear end of the pair of deck plates 212) to essentially optimize (e.g., aim to optimize; increase production rates and/or yield of the crop) the harvesting operations. Further, the controller may provide the control signals in response to the respective locations of a particular number (e.g., a threshold number, such as a threshold number or percentage over a period of time, such as more than 10, 20, 30 percent or more over the period of time) of the respective initial contacts being rearward of the target impact region of the pair of deck plates (or across all of the pairs of deck plates on the header 200). Further, the controller may provide the control signals in response to a combined impact location (e.g., an average or median of the respective locations of the initial contacts over some period of time) being outside of the target impact region. In this way, the controller may provide the alarms and/or the control signals in response to the signals indicating undesirable impact locations (e.g., outside of the target impact region), and the control signals are intended to adjust the header 200 to provide or to cause desirable impact locations (e.g., within the target impact region).

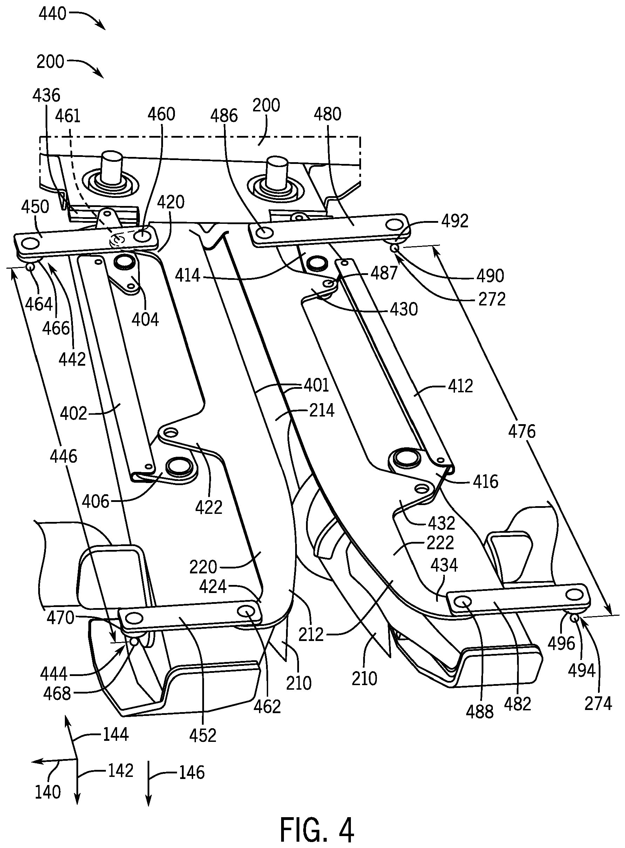

FIG. 4 is a perspective front view of an embodiment of a portion of the header 200, with components removed to show the pair of deck plates 212 and associated components of one row unit 204. As shown, the row unit 204 includes a row unit frame 400, which may be coupled to the frame 201 of the header 200. The row unit frame 400 may support the pair of stalk rollers 210 and the pair of deck plates 212. As noted herein, the pair of deck plates 212 may be adjustable to move toward and away from one another along the lateral axis 140 to change the size of the gap 214. The gap 214 is defined by respective laterally-inner edges 401 of the pair of deck plates 212.

The pair of deck plate 212 includes a first deck plate 220 and a second deck plate 222. The first deck plate 220 is associated with a first deck plate linkage 402, a first rearward coupler 404, and a first forward coupler 406. Similarly, the second deck plate 222 is associated with a second deck plate linkage 412, a second rearward coupler 414, and a second forward coupler 416. As shown, the first deck plate 220 includes a first rearward protrusion 420 (e.g., extension), a first intermediate protrusion 422 (e.g., extension), and a first forward protrusion 424 (e.g., extension). Further, the second deck plate 222 includes a second rearward protrusion 430 (e.g., extension), a second intermediate protrusion 432 (e.g., extension), and a second forward protrusions 434 (e.g., extension).

The row unit 204 may include or be associated with a row unit linkage 436 (e.g., an actuator), which is coupled to the rearward couplers 404, 414 and is configured to move relative to the row unit frame 400 along the lateral axis 140. Together, the row unit linkage 436, the deck plate linkages 402, 412, and the couplers 404, 406, 414, 416 may form a deck plate linkage assembly that is coupled to the first deck plate 220 and the second deck plate 222 to drive the first deck plate 220 and the second deck plate 222 toward and away from one another along the lateral axis 140 to change the size of the gap 214.

One or more couplings are provided between the first deck plate 220 and the row unit frame 400, and one or more couplings are provided between the second deck plate 222 and the row unit frame 400. For example, as shown, the rearward couplers 404, 414 are coupled to the row unit linkage 436 and the row unit frame 400 (e.g., rotatably coupled via respective pins and/or bushings). Additionally, the first rearward coupler 404 is coupled to the first rearward protrusion 420 of the first deck plate 220 and the first deck plate linkage 402 (e.g., rotatably coupled via respective pins and/or bushings). Further, the second rearward coupler 414 is coupled to the second rearward protrusion 430 of the second deck plate 222 and the second deck plate linkage 412 (e.g., rotatably coupled via respective pins and/or bushings). The forward couplers 406, 416 are coupled to the row unit frame 400 (e.g., rotatably coupled via respective pins and/or bushings). Additionally, the first forward coupler 406 is coupled to the first intermediate protrusion 422 of the first deck plate 220 and the first deck plate linkage 402 (e.g., rotatably coupled via respective pins and/or bushings). Further, the second forward coupler 416 is coupled to the second intermediate protrusion 432 of the second deck plate 222 and the second deck plate linkage 412 (e.g., rotatably coupled via respective pins and/or bushings).

As shown, the first rearward protrusion 420 of the first deck plate 220 and the second rearward protrusion 430 of the second deck plate 222 are complementary to one another and offset from one another along the longitudinal axis 142. Additionally, the first intermediate protrusion 422 of the first deck plate 220 and the second intermediate protrusion 432 of the second deck plate 222 are complementary to one another and offset from one another along the longitudinal axis 142. This configuration enables the first rearward protrusion 420 to couple to one portion of the first rearward coupler 404, and the second rearward protrusion 430 to couple to another portion of the second rearward coupler 414. Similarly, this configuration enables the first intermediate protrusion 422 to couple to one portion of the first forward coupler 406, and the second intermediate protrusion 432 to couple to another portion of the second forward coupler 416. Accordingly, this configuration enables movement of the row unit linkage 436 in one direction along the lateral axis 140 to drive the first deck plate 220 and the second deck plate 222 toward one another to decrease the size of the gap 214, as well as movement of the row unit linkage 436 is another direction along the lateral axis 140 to drive the first deck plate 220 and the second deck plate 222 away from one another to increase the size of the gap 214.

The header 200 may include an impact sensor system 440 with one or more sensors configured to generate signals indicative of the location of the initial contact between the crop (e.g., the desired crop material; the portion of the crop; ears of corn) and the pair of deck plates 212. The one or more sensors may be vibrationally connected to the first deck plate 220 and the second deck plate 222 (e.g., directly or indirectly connected to the first deck plate 220 and the second deck plate 222 in a manner that enables the one or more sensors to detect vibrations due to the initial contact). For example, as shown, the impact sensor system 440 may include a first sensor 442 (e.g., knock sensor; vibration sensor; rearward sensor) and a second sensor 444 (e.g., knock sensor; vibration sensor; forward sensor) coupled to the first deck plate 220. In particular, the first sensor 442 is coupled to the first deck plate 220 at a first location of the first deck plate 220 (e.g., proximate a rearward edge of the first deck plate 220 relative to the direction of travel 146; at a rearward portion of the first deck plate 220, such as a rearward quarter of the first deck plate 220 or a rearward half of the first deck plate 220 including or not including the midpoint; rearward of the second sensor 444) and the second sensor 444 is coupled to the first deck plate 220 at a second location of the first deck plate (e.g., proximate a forward edge of the first deck plate 220 relative to the direction of travel 146; at a forward portion of the first deck plate 220, such as a forward quarter of the first deck plate 220 or a forward half of the first deck plate 220 including or not including the midpoint; forward of the first sensor 442). Thus, the first sensor 442 and the second sensor 444 are separated from one another by a distance 446 (e.g., along the longitudinal axis 142). It should be appreciated that the first location and the second location may be any suitable locations along the first deck plate 220 (e.g., forward, rearward, intermediate or midline) that enable the first sensor 442 and the second sensor 444 to be separated from one another by the distance 446 (e.g., along the longitudinal axis 142).

The first sensor 442 and the second sensor 444 detect vibrations, the first sensor 442 outputs first signals indicative of the vibrations detected by the first sensor 442, and the second sensor 444 outputs second signals indicative of the vibrations detected by the second sensor 444. The first signals and the second signals, taken together, indicate the location of the initial contact with the first deck plate 220 (and thus, the pair of deck plates 212 and the row unit 204) along the longitudinal axis 142. In particular, a controller (e.g., electronic controller) may receive and process the first signals and the second signals to determine the location of the initial contact of the crop on the first deck plate 220.

In FIG. 4, the first sensor 442 is supported on a first bracket 450 (e.g., extension; rearward bracket) that is coupled (e.g., via a fastener, such as a bolt and/or a weld) to the first deck plate 220, such as to the first rearward protrusion 420 of the first deck plate 220. The second sensor 444 is supported on a second bracket 452 (e.g., extension; forward bracket) that is coupled (e.g., via a fastener, such as a bolt and/or a weld) to the first deck plate 220, such as to the first forward protrusion 424 of the first deck plate 220. The first bracket 450 and the second bracket 452 may extend laterally from the first deck plate 220. In particular, respective plate-contacting ends (e.g., first ends) are coupled to the first deck plate 220 and respective sensor-supporting ends (e.g., second ends) are laterally offset from the first deck plate 220 (e.g., positioned on a laterally opposite side of the first deck plate 220 of the edge 401 that defines the gap 214). As shown, the respective sensor-supporting ends may be laterally offset from the row unit frame 400 and may position the first sensor 442 and the second sensor 444 outside of the row unit frame 400 of the row unit 204 (e.g., to be under a respective hood between adjacent row units 204; in a respective space defined between adjacent row unit frames 400 of adjacent row units 204 along the lateral axis 140). This position may protect the first sensor 442 and the second sensor 444 from debris (e.g., via the hood), make the first sensor 442 and the second sensor 444 accessible for maintenance operations (e.g., inspection, repair, replacement), provide sufficient space for wiring (e.g., electrical wiring) and/or mounting the first sensor 442 and the second sensor 444, provide sufficient space for the linkage assembly, enable retrofitting of the first sensor 442 and the second sensor 444 to a variety of headers, and/or provide any of a variety of other advantages. It should be appreciated that the first sensor 442 and the second sensor 444 may be positioned at any location that protects the first sensor 442 and the second sensor 444 from direct impact of the crop. For example, the first sensor 442 and the second sensor 444 may be positioned at any location under the hood 218 or other cover/structure (e.g., surrounded or at least partially covered by the hood 218 or other cover/structure; blocked from the direct impact or contact with the crop).

As shown, the first bracket 450 is mounted (e.g., rigidly coupled) to the first rearward protrusion of the first deck plate 220 via a respective fastener 460 (e.g., bolt, weld), and the first rearward protrusion 420 of the first deck plate 220 is coupled (e.g., rotatably coupled) to the row unit frame 400 via a respective fastener 461 (e.g., bushing). In some embodiments, to facilitate isolation of the first sensor 442 (and possibly to some extent, the second sensor 444) from vibrations of the header 200 itself (e.g., due to travel over ground; engine vibrations), the respective fastener 461 may be formed from a nylon material (e.g., nylon or composite including nylon; instead of a metal material, like at least some other fasteners and/or the pair of deck plates 212 of the row unit 204). Indeed, any of the couplings (e.g., fasteners, pins, bushings) disclosed herein may be formed from a nylon material (e.g., nylon or composite include nylon) and/or any suitable non-metal material (e.g., plastic material, composite material). However, it should be appreciated that any of the couplings disclosed herein may be formed from a metal (e.g., metal or metal alloy) material. Additionally, as shown, the first bracket 450 may extend laterally over (e.g., bend; across; above relative to the vertical axis 144) the first rearward coupler 404.

The second bracket 452 may be mounted (e.g., rigidly coupled) to the first forward protrusion 424 of the first deck plate 220 via a respective fastener 462 (e.g., bolt, weld). The first forward protrusion 424 may not be mounted to the first deck plate 220, and instead, this portion of the first deck plate 220 may be positioned over or on the row unit frame 400 to slide over or along the row unit frame 400. In some embodiments, to facilitate isolation of the second sensor 444 (and possibly to some extent, the first sensor 442) from vibrations of the header 200 itself (e.g., due to travel over ground; engine vibrations), a non-metal (e.g., plastic material, including polymer or polymer composite material; nylon material, such as nylon or composite including nylon) sheet may be positioned between the first forward protrusion 424 and the row unit frame 400. Indeed, a non-metal sheet may be positioned at any location between the first deck plate 220 and the row unit frame 400 (e.g., along some or any portion of the first deck plate 220).

The first sensor 442 may include a first sensor element 464 and a first housing 466, and the second sensor 444 may include a second sensor element 468 and a second housing 470. It should be appreciated that the first housing 466 may couple to the first bracket 450 and the second housing 470 may couple to the second bracket 452 via any suitable fastener (e.g., bolt, weld, adhesive) or combination of fasteners. It should also be appreciated that certain components may be integrally formed (e.g., one-piece construction). For example, the first bracket 450 and/or the second bracket 452 may be integrally formed with the first deck plate 220 (e.g., be part of the first deck plate 220). That is, the first deck plate 220 may include a first protrusion or extension that extends in a same or similar configuration/location as the first bracket 450 and a second protrusion or extension that extends in a same or similar configuration/location as the second bracket 452.

In some embodiments, the row unit 204 may include additional sensors, such as a third sensor 472 (e.g., knock sensor; vibration sensor; rearward sensor) and a fourth sensor 474 e.g., knock sensor; vibration sensor; forward sensor) coupled to the second deck plate 222. The third sensor 272 is coupled to the second deck plate 222 at a first location of the second deck plate 222 (e.g., proximate a rearward edge of the second deck plate 222 relative to the direction of travel 146; at a rearward portion of the second deck plate 222, such as a rearward quarter of the second deck plate 222 or a rearward half of the second deck plate 222 including or not including the midpoint; rearward of the fourth sensor 474) and the fourth sensor 474 is coupled to second deck plate 222 at a second location of the second deck plate 222 (e.g., proximate a forward edge of the second deck plate 222 relative to the direction of travel 146; at a forward portion of the second deck plate 222, such as a forward quarter of the second deck plate 222 or a forward half of the second deck plate 222 including or not including the midpoint; forward of the third sensor 472). Thus, the third sensor 472 and the fourth sensor 474 are separated from one another by a distance 476 (e.g., along the longitudinal axis 142). It should be appreciated that the first location and the second location may be any suitable locations along the second deck plate 222 (e.g., forward, rearward, intermediate or midline) that enable the third sensor 472 and the fourth sensor 474 to be separated from one another by the distance 476 (e.g., along the longitudinal axis 142).

The third sensor 472 and the fourth sensor 474 detect vibrations, the third sensor 472 outputs third signals indicative of the vibrations detected by the third sensor 472, and the fourth sensor 474 outputs fourth signals indicative of the vibrations detected by the fourth sensor 474. The third signals and the fourth signals, taken together, indicate the location of the initial contact with the second deck plate 222 (and thus, the pair of deck plates 212 and the row unit 204) along the longitudinal axis 142. In particular, the controller may receive and process the third signals and the fourth signals to determine the location of the initial contact of the crop on the second deck plate 222.

In FIG. 4, the third sensor 472 is supported on a third bracket 480 (e.g., extension; rearward bracket) that is coupled (e.g., via a fastener, such as a bolt and/or a weld) to the second deck plate 222, such as a position that is opposite the first bracket 450 (e.g., relative to the lateral axis 140; aligned along the longitudinal axis 142). The fourth sensor 474 is supported on a fourth bracket 482 (e.g., extension; forward bracket) that is coupled (e.g., via a fastener, such as a bolt and/or a weld) to the second deck plate 222, such as to the second forward protrusion 434 of the second deck plate 222. The fourth bracket 482 may be at a position that is opposite the second bracket 452 (e.g., relative to the lateral axis 140; aligned along the longitudinal axis 142). The third bracket 480 and the fourth bracket 482 may extend laterally from the second deck plate 222. In particular, respective plate-contacting ends (e.g., first ends) are coupled to the second deck plate 222 and respective sensor-supporting ends (e.g., second ends) are laterally offset from the second deck plate 222. As shown, the respective sensor-supporting ends may be laterally offset from the row unit frame 400 and may position the third sensor 472 and the fourth sensor 474 outside of the row unit frame 400 of the row unit 204 (e.g., to be under a respective hood between adjacent row units 204; in a respective space defined between adjacent row unit frames 400 of adjacent row units 204 along the lateral axis 140).

As shown, the third bracket 480 is mounted (e.g., rigidly coupled) to the second deck plate 222 via a respective fastener 486 (e.g., bolt, weld), and the second rearward protrusion 430 of the second deck plate 222 is coupled (e.g., rotatably coupled) to the row unit frame 400 via a respective fastener 487 (e.g., bushing). The third bracket 480 may extend laterally over (e.g., bend; across; above relative to the vertical axis 144) the second rearward coupler 414. In some embodiments, to facilitate isolation of the third sensor 472 (and possibly to some extent, the fourth sensor 474) from vibrations of the header 200 itself (e.g., due to travel over ground; engine vibrations), the respective fastener 487 may be formed from a nylon material (e.g., nylon or composite including nylon). Indeed, any of the couplings (e.g., fasteners, pins, bushings) disclosed herein may be formed from a nylon material (e.g., nylon or composite including nylon) and/or any suitable non-metal material (e.g., plastic material, composite material). However, it should be appreciated that any of the couplings disclosed herein may be formed from a metal (e.g., metal or metal alloy) material. The fourth bracket 482 may be mounted to the second forward protrusion 434 of the second deck plate 222 via a respective fastener 488 (e.g., bolt, weld).

The second forward protrusion 434 may not be mounted to the row unit frame 400, and instead, this portion of the second deck plate 222 may be positioned over or on the row unit frame 400 to slide over or along the row unit frame 400. In some embodiments, to facilitate isolation of the fourth sensor 474 (and possibly to some extent, the third sensor 472) from vibrations of the header 200 itself (e.g., due to travel over ground; engine vibrations), a non-metal (e.g., plastic material, including polymer or polymer composite material; nylon material, such as nylon or composite including nylon) sheet may be positioned between the second forward protrusion 434 and the row unit frame 400. Indeed, a non-metal sheet may be positioned at any location between the second deck plate 222 and the row unit frame 400 (e.g., along some or any portion of the second deck plate 222). As noted herein, it should be appreciated that any of the fasteners and/or contact points between the row unit frame 400 and the pair of deck plates 212 (e.g., including within the linkage assembly) may be formed from (e.g., include) a non-metal component (e.g., plastic material; nylon material). However, it should be appreciated that any of the couplings disclosed herein may be formed from a metal (e.g., metal or metal alloy) material.

The third sensor 472 may include a third sensor element 490 and a third housing 492, and the fourth sensor 474 may include a fourth sensor element 494 and a fourth housing 496. It should be appreciated that the third housing 492 may couple to the third bracket 480 and the fourth housing 496 may couple to the fourth bracket 482 via any suitable fastener (e.g., bolt, weld, adhesive) or combination of fasteners. It should also be appreciated that certain components may be integrally formed (e.g., one-piece construction). For example, the third bracket 480 and/or the fourth bracket 482 may be integrally formed with the second deck plate 222 (e.g., be part of the second deck plate 222). That is, the second deck plate 222 may include a third protrusion or extension that extends in a same or similar configuration/location as the third bracket 480 and a fourth protrusion or extension that extends in a same or similar configuration/location as the fourth bracket 482. As noted herein, the one or more sensors may be vibrationally connected to the pair of deck plates 212, such as via the brackets or even through contact with the row unit frame 400 (e.g., the one or more sensors are coupled to or mounted on the row unit frame 400, and the pair of deck plates 212 rest on the row unit frame 400 so that vibrations from the initial contact on the pair of deck plates 212 travel from the pair of deck plates 212 to the one or more sensors through the row unit frame 400).

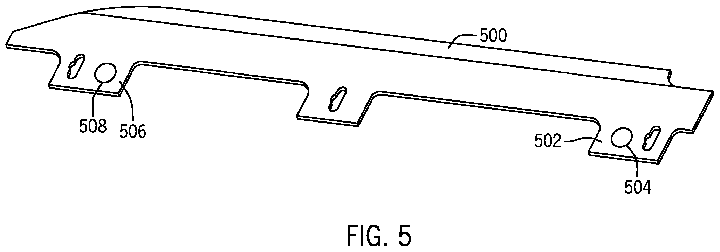

Any of a variety of shapes and/or types of deck plates may be adapted for use with the impact sensor system disclosed herein. For example, FIG. 5 is a perspective side view of a deck plate 500 that may be utilized in the header of FIG. 2, in accordance with an embodiment of the present disclosure. As shown, the deck plate 500 may include a rearward protrusion 502 that is sized to support a first sensor 504 (e.g., knock sensor; vibration sensor; rearward sensor; the first sensor 504 is mounted directly to the rearward protrusion 502 via a fastener, such as a bolt, weld, and/or adhesive). Further, the deck plate 500 may include a forward protrusion 506 that is sized to support a second sensor 508 (e.g., knock sensor; vibration sensor; the second sensor 508 is mounted directly to the forward protrusion 506 via a fastener, such as a bolt, weld, and/or adhesive). Indeed, the first sensor 504 and the second sensor 508 may be positioned at any of a variety of locations along the deck plate 500. The deck plate 500 may be include any features of the first deck plate shown and described with reference to FIG. 4. The first sensor 504 and the second sensor 508 may include any features of the first sensor 442 and the second sensor 444, respectively, shown and described with reference to FIG. 4.

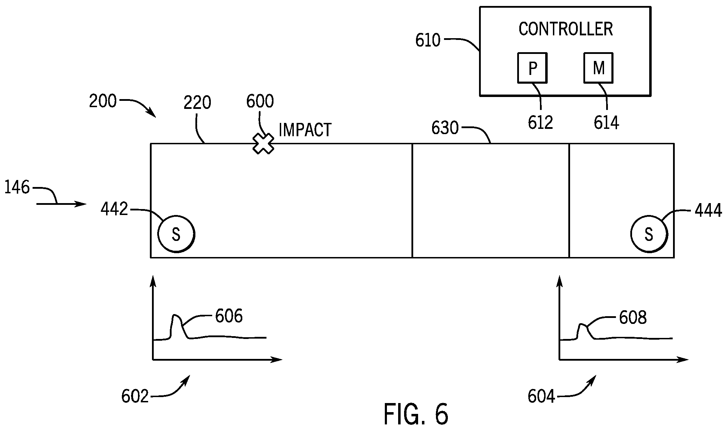

FIG. 6 is a schematic diagram of a portion of the header 200 with sensors, as well as exemplary graphs of signals generated by the sensors. In one embodiment, the portion of the header 200 includes the first deck plate 220, and the sensors include the first sensor 442 and the second sensor 444 coupled (directly or indirectly) to the first deck plate 220. During harvesting operations, the crop may strike and make initial contact with the first deck plate 220 at a location 600 (e.g., impact location). In response to the initial contact, the first sensor 442 and the second sensor 444 detect vibrations and generate respective signals based on the vibrations. For example, the first sensor 442 may generate a first signal shown in a first exemplary graph 602, and the second sensor 444 may generate a second signal shown in a second exemplary graph 604. Because the first sensor 442 is closer to the location 600, a respective amplitude of a first peak 606 of the first signal due to the initial contact is greater than a respective amplitude of a second peak 608 of the second signal due to the initial contact. It should be appreciated that one of both of the respective amplitude and/or a respective time of travel may be analyzed to determine the location 600.

As shown, the impact sensor system includes a controller 610 (e.g., electronic controller) with a processor 612 and a memory device 614. The controller 610 is communicatively coupled to the first and second sensors 442, 444. The controller 610 receives and processes the signals (e.g., using one or more algorithms; based on a comparison of the first peak 606 to the second peak 608) to determine the location 600 of the initial contact, and then the controller 610 generates an appropriate output. As noted herein, the appropriate output may include the visual alarm and/or the audible alarm. In some embodiments, the appropriate output may include control signals, such as control signals to the actuators to adjust the position and/or the spatial orientation of the header 200 and/or a rotation rate of the pair of stalk rollers. In some embodiments, the controller 610 may not provide the alarm(s) and/or the control signals for each occurrence of the location 600 being outside of a target impact region 630, but instead may record or track each occurrence and trigger the alarm(s) and/or the control signals in response to some percentage of the crops over some period of time striking outside of the target impact region 630, such as more than 10, 20, 30, 40, or 50 percent over 10, 20, or 30 seconds. Further, it should be appreciated that the controller 610 may also receive and account for other inputs (e.g., detected loose or flying kernels, detected stalks at the rear end of the pair of deck plates) to provide the alarm(s) and/or to automatically, dynamically provide the control signals (e.g., with an aim to optimize; increase production rates and/or yield of the crop) the harvesting operations. For example, in some embodiments, the controller 610 may not provide the alarm(s) and/or the control signals if the initial contact of the crop occurs outside of the target impact region 630, but the other inputs indicate that the harvesting operations are proceeding appropriately (e.g., minimal loose or flying kernels and minimal detected stalks at the rear end of the pair of deck plates).

The processor 612 may be used to execute software, such as software for processing signals, controlling the agricultural system, and/or controlling the header 200. Moreover, the processor 612 may include multiple microprocessors, one or more "general-purpose" microprocessors, one or more special-purpose microprocessors, and/or one or more application specific integrated circuits (ASICS), or some combination thereof. For example, the processor 612 may include one or more reduced instruction set (RISC) or complex instruction set (CISC) processors. The memory device 614 may include a volatile memory, such as random access memory (RAM), and/or a nonvolatile memory, such as read-only memory (ROM). The memory device 614 may store a variety of information and may be used for various purposes. For example, the memory device 614 may store processor-executable instructions (e.g., firmware or software) for the processor 612 to execute, such as instructions for processing signals, controlling the agricultural system, and/or controlling the header 200. The processor 612 may include multiple processors and/or the memory device 614 may include multiple memory devices. The processor 612 and/or the memory device 614, or the multiple processors and/or the multiple memory devices, may be located in any suitable portion of the agricultural system (e.g., a cab of the agricultural system and/or on the header 200). Further, the controller 610 may be a distributed controller with the multiple processors and/or the multiple memory devices in separate housings or locations (e.g., in the agricultural system, in the header 200, remote, in the cloud).

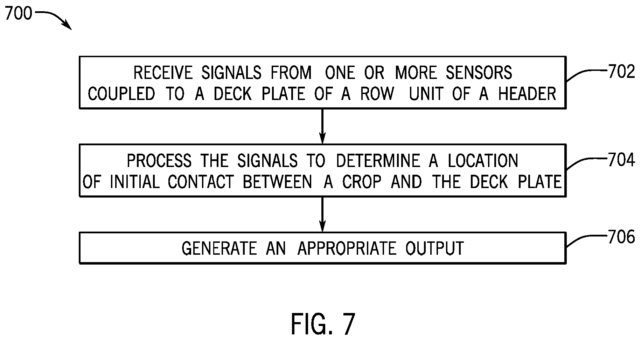

FIG. 7 is a flowchart of an embodiment of a method 700 for determining an impact location on a header, such as the header of FIG. 2. The method 700 may be performed via the controller disclosed herein, or another suitable device. Further, the method 700 may be performed differently in additional or alternative embodiments. For instance, additional steps may be performed with respect to the method 700, and/or certain steps of the method 700 may be modified, removed, performed in a different order, or a combination thereof. The method 700 may be performed based on data received from the sensors of FIGS. 4-6 and/or based on other types of data (e.g., detected loose or flying kernels, detected stalks at the rear end of the pair of deck plates 212).

At block 702, the controller may receive signals from one or more sensors coupled to (e.g., directly or indirectly) one or more deck plates of a row unit of a header. In some embodiments, the one or more sensors may include a first sensor (e.g., knock sensor; vibration sensor; rearward sensor) and a second sensor (e.g., knock sensor; vibration sensor; forward sensor) positioned at separate locations along a longitudinal axis of the header. During harvesting operations, the crop (e.g., the portion of the crop; the desirable crop material; ears of corn) may strike and make initial contact with the one or more deck plates at a location (e.g., impact location) along the one or more deck plates. In response to the initial contact, the first sensor and the second sensor detect vibrations and generate respective signals based on the vibrations.

At block 704, the controller may process the signals to determine the location of initial contact between the crop and the one or more deck plates of the row unit of the header. If the first sensor is closer to the location, a respective amplitude of a first peak of a first signal generated by the first sensor due to the initial contact is greater than a respective amplitude of a second peak of a second signal generated by the second sensor due to the initial contact. The controller may process (e.g., using one or more algorithms) the first signal and the second signal (e.g., analyze respective amplitudes of the first peak and the second peak and/or respective time delays) to determine the location of the initial contact.

At block 706, the controller may generate an appropriate output. In some embodiments, the appropriate output may include a visual alarm and/or an audible alarm. In some embodiments, the appropriate output may include control signals, such as control signals to the actuators to adjust the position and/or the spatial orientation of the header and/or a rotation rate of the pair of stalk rollers. For example, in response to the location of the initial contact being rearward of a target impact region of the one or more deck plates, the controller may instruct output of the visual alarm and/or the audible alarm, raise the header relative to the chassis of the agricultural system and the ground, and/or reduce an angle between the header and the ground. In some embodiments, the controller may provide the control signals to manipulate the actuators based on the location of the initial contact, but also accounting for other operational features (e.g., detected loose or flying kernels, detected stalks at the rear end of the one or more deck plates) to essentially optimize (e.g., aim to optimize; increase production rates and/or yield of the crop) the harvesting operations. The controller may repeat the method 700 as the agricultural system harvests crops in a field.

While only certain features of the invention have been illustrated and described herein, many modifications and changes will occur to those skilled in the art, which are within the scope of the present invention as defined by the appended claims.

## Claims

1. An impact sensor system (440) for a header (200) of an agricultural system (100), the impact sensor system (440) comprising:
a controller (400);
a first sensor (442) vibrationally connected to a deck plate (212) of the header (200), wherein the first sensor (442) is configured to generate first signals in response to detection of vibrations due to initial contact between a crop and the deck plate (212) of the header (200);
a second sensor (444) vibrationally connected to the deck plate (212) of the header (200) and positioned forward of the first sensor (442), wherein the second sensor (444) is configured to generate second signals in response to detection of the vibrations due to the initial contact between the crop and the deck plate (212) of the header (200);
**characterized in that**
(400) is configured to:
receive the first signals and the second signals;
and process the first signals and the second signals to determine a location of the initial contact between the crop and the deck plate (212) of the header (200).

2. The impact sensor system (440) of claim 1, wherein the first sensor (442) is supported at a rearward portion of the deck plate (212) of the header (200), and the second sensor (444) is supported at a forward portion of the deck plate (212) of the header (200).

3. The impact sensor system (440) of claim 2, wherein the first sensor (442) is supported on a first extension (420, 450) at a rearward portion of the deck plate (212) of the header (200), the second sensor (444) is supported on a second extension (424, 452) at a forward portion of the deck plate (212) of the header (200), and the first extension (420, 450) and the second extension (424, 452) extend laterally away from an inner edge (401) of the deck plate (212) of the header (200).

4. The impact sensor system (440) of claim 3, wherein the first extension (420, 450) and the second extension (424, 452) are configured to position the first sensor (442) and the second sensor (444), respectively, under a cover (218) of the header (200).

5. The impact sensor system (440) of claims 3 to 4, wherein the first extension (420, 450) and the second extension (424, 452) are configured to position the first sensor (442) and the second sensor (444), respectively, in a space between adjacent row unit frames (400).

6. The impact sensor system (440) of claims 3 to 5, wherein the deck plate (212) is configured to couple to a linkage assembly, and the first extension (420, 450) is configured to extend vertically over a rearward coupler (404) of the linkage assembly.

7. The impact sensor system (440) of claims 3 to 6, wherein the first extension (420, 450) is part of the deck plate (212).

8. The impact sensor system (440) of any of claims 1 to 7, comprising a coupling (460, 461) between the deck plate (212) and a row unit frame (400) of the header (200), wherein the coupling (460, 461) comprises a bushing formed from a composite material.

9. The impact sensor system (440) of any of claims 1 to 8, comprising a non-metal sheet positioned between the deck plate (212) and a row unit frame (400) of the header (200).

10. The impact sensor system (440) of any of claims 1 to 9, wherein the first sensor (442) and the second sensor (444) comprise knock sensors.

11. The impact sensor system (440) of any of claims 1 to 10, wherein the controller (400) is further configured to:
to determine the location of the initial contact between the crop and the deck plate (212) of the header (200) using a respective amplitude and/or a respective time of travel generated from the first and second signals respectively

12. The impact sensor system (440) of claim 11, wherein the controller (400) is configured to provide an appropriate output based on the location of the initial contact, and the appropriate output comprises one or more alarms, one or more control signals to adjust the header (200), or both.

13. The impact sensor system (440) of claim 11, wherein the controller (400) is configured to provide an appropriate output based on the location of the initial contact, and the appropriate output comprises one or more control signals to adjust a rotation rate of a pair of stalk rollers (210) of the header (200).

14. A method for determining an impact location on a header (200), the method comprising:
operating a header (200) to harvest crops as the header (200) travels through a field;
generating, via a first sensor (442) coupled to a first location of a deck plate (212) of the header (200), first signals indicative of vibrations due to an initial contact between a portion of the crops and the deck plate (212) of the header (200);
generating, via a second sensor (444) coupled to a second location of the deck plate (212) of the header (200) that is separated from the first location by a distance along a longitudinal axis, second signals indicative of the vibrations due to the initial contact between the portion of the crops and the deck plate (212) of the header (200); and
processing, via one or more processors, the first signals and the second signals to determine a location of the initial contact between the portion of the crops and the deck plate (212) of the header (200).

## Patentansprüche

1. Aufprallsensorsystem (440) für einen Vorsatz (200) eines landwirtschaftlichen Systems (100), wobei das Aufprallsensorsystem (440) umfasst:
eine Steuerung (400);
einen ersten Sensor (442), der schwingungsmäßig mit einer Deckplatte (212) des Vorsatzes (200) verbunden ist, wobei der erste Sensor (442) konfiguriert ist, um erste Signale als Reaktion auf die Erfassung von Schwingungen aufgrund eines anfänglichen Kontakts zwischen einem Erntegut und der Deckplatte (212) des Vorsatzes (200) zu erzeugen;
einen zweiten Sensor (444), der schwingungsmäßig mit der Deckplatte (212) des Vorsatzes (200) verbunden und vor dem ersten Sensor (442) positioniert ist, wobei der zweite Sensor (444) konfiguriert ist, um zweite Signale als Reaktion auf die Erfassung der Schwingungen aufgrund des anfänglichen Kontakts zwischen dem Erntegut und der Deckplatte (212) des Vorsatzes (200) zu erzeugen; **dadurch gekennzeichnet, dass** die Steuerung (400) konfiguriert ist, um:
die ersten Signale und die zweiten Signale zu empfangen
und die ersten Signale und die zweiten Signale zu verarbeiten, um eine Position des anfänglichen Kontakts zwischen dem Erntegut und der Deckplatte (212) des Schneidwerks (200) zu bestimmen.

2. Aufprallsensorsystem (440) nach Anspruch 1, wobei der erste Sensor (442) an einem rückwärtigen Abschnitt der Deckplatte (212) des Vorsatzes (200) abgestützt ist und der zweite Sensor (444) an einem vorderen Abschnitt der Deckplatte (212) des Vorsatzes (200) abgestützt ist.

3. Aufprallsensorsystem (440) nach Anspruch 2, wobei der erste Sensor (442) auf einer ersten Verlängerung (420, 450) an einem rückwärtigen Abschnitt der Deckplatte (212) des Vorsatzes (200) abgestützt ist, der zweite Sensor (444) auf einer zweiten Verlängerung (424, 452) an einem vorderen Abschnitt der Deckplatte (212) des Vorsatzes (200) abgestützt ist und sich die erste Verlängerung (420, 450) und die zweite Verlängerung (424, 452) seitlich weg von einer inneren Kante (401) der Deckplatte (212) des Vorsatzes (200) erstrecken.

4. Aufprallsensorsystem (440) nach Anspruch 3, wobei die erste Verlängerung (420, 450) und die zweite Verlängerung (424, 452) konfiguriert sind, um den ersten Sensor (442) bzw. den zweiten Sensor (444) unter einer Abdeckung (218) des Vorsatzes (200) zu positionieren.

5. Aufprallsensorsystem (440) nach den Ansprüchen 3 bis 4, wobei die erste Verlängerung (420, 450) und die zweite Verlängerung (424, 452) konfiguriert sind, um den ersten Sensor (442) bzw. den zweiten Sensor (444) in einem Raum zwischen benachbarten Reiheneinheitsrahmen (400) zu positionieren.

6. Aufprallsensorsystem (440) nach den Ansprüchen 3 bis 5, wobei die Deckplatte (212) konfiguriert ist, um mit einer Gestängeanordnung zu koppeln, und die erste Verlängerung (420, 450) konfiguriert ist, um sich vertikal über einen rückwärtigen Koppler (404) der Gestängeanordnung zu erstrecken.

7. Aufprallsensorsystem (440) nach den Ansprüchen 3 bis 6, wobei die erste Verlängerung (420, 450) Teil der Deckplatte (212) ist.

8. Aufprallsensorsystem (440) nach einem der Ansprüche 1 bis 7, umfassend eine Kopplung (460, 461) zwischen der Deckplatte (212) und einem Reiheneinheitsrahmen (400) des Vorsatzes (200), wobei die Kopplung (460, 461) eine aus einem Verbundwerkstoff gebildete Buchse umfasst.

9. Aufprallsensorsystem (440) nach einem der Ansprüche 1 bis 8, umfassend ein Nichtmetallblech, das zwischen der Deckplatte (212) und einem Reiheneinheitsrahmen (400) des Vorsatzes (200) positioniert ist.

10. Aufprallsensorsystem (440) nach einem der Ansprüche 1 bis 9, wobei der erste Sensor (442) und der zweite Sensor (444) Klopfsensoren umfassen.

11. Aufprallsensorsystem (440) nach einem der Ansprüche 1 bis 10, wobei die Steuerung (400) ferner konfiguriert ist, um:
die Lage des ersten Kontakts zwischen dem Erntegut und der Bodenplatte (212) des Vorsatzes (200) unter Verwendung einer jeweiligen Amplitude und/oder einer jeweiligen Fahrzeit, die aus dem ersten bzw. zweiten Signal erzeugt werden, zu bestimmen.

12. Aufprallsensorsystem (440) nach Anspruch 11, wobei die Steuerung (400) konfiguriert ist, um eine geeignete Ausgabe basierend auf der Position des anfänglichen Kontakts bereitzustellen, und die geeignete Ausgabe einen oder mehrere Alarme, ein oder mehrere Steuersignale zum Justieren des Vorsatzes (200) oder beides umfasst.

13. Aufprallsensorsystem (440) nach Anspruch 11, wobei die Steuerung (400) konfiguriert ist, um eine geeignete Ausgabe basierend auf dem Ort des anfänglichen Kontakts bereitzustellen, und die geeignete Ausgabe ein oder mehrere Steuersignale umfasst, um eine Drehgeschwindigkeit eines Paars von Stengelwalzen (210) des Vorsatzes (200) zu justieren.

14. Verfahren zum Bestimmen einer Aufprallstelle an einem Vorsatz (200), wobei das Verfahren umfasst:
Betreiben eines Vorsatzes (200) zum Ernten von Feldfrüchten, während sich der Vorsatz (200) durch ein Feld bewegt;
Erzeugen, über einen ersten Sensor (442), der an eine erste Stelle einer Deckplatte (212) des Vorsatzes (200) gekoppelt ist, erster Signale, die Schwingungen aufgrund eines anfänglichen Kontakts zwischen einem Abschnitt der Feldfrüchte und der Deckplatte (212) des Vorsatzes (200) anzeigen;
Erzeugen, über einen zweiten Sensor (444), der an eine zweite Stelle der Deckplatte (212) des Vorsatzes (200) gekoppelt ist, die von der ersten Stelle um eine Entfernung entlang einer Längsachse getrennt ist, zweiter Signale, die die Schwingungen aufgrund des anfänglichen Kontakts zwischen dem Abschnitt der Feldfrüchte und der Deckplatte (212) des Vorsatzes (200) anzeigen; und
Verarbeiten der ersten Signale und der zweiten Signale über einen oder mehrere Prozessoren, um eine Position des anfänglichen Kontakts zwischen dem Abschnitt der Feldfrüchte und der Deckplatte (212) des Vorsatzes (200) zu bestimmen.

## Revendications

1. Système de capteur d'impact (440) pour une écimeuse (200) d'un système agricole (100), le système de capteur d'impact (440) comprenant :
un dispositif de commande (400) ;
un premier capteur (442) relié de manière vibratoire à une plaque de pont (212) de l'écimeuse (200), dans lequel le premier capteur (442) est configuré pour générer des premiers signaux en réponse à la détection de vibrations dues à un contact initial entre une culture et la plaque de pont (212) de l'écimeuse (200) ;
un second capteur (444) connecté de manière vibratoire à la plaque de pont (212) de l'écimeuse (200) et positionné en avant du premier capteur (442), dans lequel le second capteur (444) est configuré pour générer des seconds signaux en réponse à la détection des vibrations dues au contact initial entre la culture et la plaque de pont (212) de l'écimeuse (200) ; **caractérisé en ce que** le dispositif de commande (400) est configuré pour :
recevoir les premiers signaux et les seconds signaux ;
et traiter les premiers signaux et les seconds signaux pour déterminer un emplacement du contact initial entre la culture et la plaque de pont (212) de l'écimeuse (200).

2. Système de capteur d'impact (440) selon la revendication 1, dans lequel le premier capteur (442) est supporté au niveau d'une partie arrière de la plaque de pont (212) de l'écimeuse (200), et le second capteur (444) est supporté au niveau d'une partie avant de la plaque de pont (212) de l'écimeuse (200).

3. Système de capteur d'impact (440) selon la revendication 2, dans lequel le premier capteur (442) est supporté sur une première extension (420, 450) au niveau d'une partie arrière de la plaque de pont (212) de l'écimeuse (200), le second capteur (444) est supporté sur une seconde extension (424, 452) au niveau d'une partie avant de la plaque de pont (212) de l'écimeuse (200), et la première extension (420, 450) et la seconde extension (424, 452) s'étendent latéralement à l'écart d'un bord intérieur (401) de la plaque de pont (212) de l'écimeuse (200).

4. Système de capteur d'impact (440) selon la revendication 3, dans lequel la première extension (420, 450) et la seconde extension (424, 452) sont conçues pour positionner le premier capteur (442) et le second capteur (444), respectivement, sous un couvercle (218) de l'écimeuse (200).

5. Système de capteur d'impact (440) selon les revendications 3 à 4, dans lequel la première extension (420, 450) et la seconde extension (424, 452) sont conçues pour positionner le premier capteur (442) et le second capteur (444), respectivement, dans un espace entre des cadres d'unités de rangée adjacents (400).

6. Système de capteur d'impact (440) selon les revendications 3 à 5, dans lequel la plaque de pont (212) est conçue pour s'accoupler à un ensemble d'attelage, et la première extension (420, 450) est conçue pour s'étendre verticalement par-dessus un coupleur arrière (404) de l'ensemble d'attelage.

7. Système de capteur d'impact (440) selon les revendications 3 à 6, dans lequel la première extension (420, 450) fait partie de la plaque de pont (212).

8. Système de capteur d'impact (440) selon l'une quelconque des revendications 1 à 7, comprenant un accouplement (460, 461) entre la plaque de pont (212) et un cadre d'unité de rangée (400) de l'écimeuse (200), dans lequel l'accouplement (460, 461) comprend une bague formée d'un matériau composite.

9. Système de capteur d'impact (440) selon l'une quelconque des revendications 1 à 8, comprenant une feuille non métallique positionnée entre la plaque de pont (212) et un cadre d'unité de rangée (400) de l'écimeuse (200).

10. Système de capteur d'impact (440) selon l'une quelconque des revendications 1 à 9, dans lequel le premier capteur (442) et le second capteur (444) comprennent des capteurs de cliquetis.

11. Système de capteur d'impact (440) selon l'une quelconque des revendications 1 à 10, dans lequel le dispositif de commande (400) est en outre configuré pour :
déterminer l'emplacement du contact initial entre la culture et la plaque de pont (212) de l'écimeuse (200) à l'aide d'une amplitude respective et/ou d'un temps de déplacement respectif généré par les premier et second signaux respectivement.

12. Système de capteur d'impact (440) selon la revendication 11, dans lequel le dispositif de commande (400) est configuré pour fournir une sortie appropriée sur la base de l'emplacement du contact initial, et la sortie appropriée comprend une ou plusieurs alarmes, un ou plusieurs signaux de commande pour ajuster l'écimeuse (200), ou les deux.

13. Système de capteur d'impact (440) selon la revendication 11, dans lequel le dispositif de commande (400) est configuré pour fournir une sortie appropriée sur la base de l'emplacement du contact initial, et la sortie appropriée comprend un ou plusieurs signaux de commande pour ajuster une vitesse de rotation d'une paire de rouleaux de tiges (210) de l'écimeuse (200).

14. Procédé destiné à déterminer un emplacement d'impact sur une écimeuse (200), le procédé comprenant :
le fonctionnement d'une écimeuse (200) pour récolter des cultures au fur et à mesure que l'écimeuse (200) se déplace à travers un champ ;
la génération, par l'intermédiaire d'un premier capteur (442) couplé à un premier emplacement d'une plaque de pont (212) de l'écimeuse (200), de premiers signaux indiquant des vibrations dues à un contact initial entre une partie des cultures et la plaque de pont (212) de l'écimeuse (200) ;
la génération, par l'intermédiaire d'un second capteur (444) couplé à un second emplacement de la plaque de pont (212) de l'écimeuse (200) qui est séparé du premier emplacement par une distance le long d'un axe longitudinal, de seconds signaux indiquant les vibrations dues au contact initial entre la partie des cultures et la plaque de pont (212) de l'écimeuse (200) ; et
le traitement, par l'intermédiaire d'un ou de plusieurs processeurs, des premiers signaux et des seconds signaux pour déterminer un emplacement du contact initial entre la partie des cultures et la plaque de pont (212) de l'écimeuse (200).
